# EUROPEAN PATENT SPECIFICATION

(11) **EP 2 741 871 B1**
(45) Date of publication and mention of the grant of the patent: **09.12.2015**
(21) Application number: 13728126.7
(22) Date of filing: 14.05.2013
(51) Int. Cl.: B21F 11/00, B21F 27/12, B23K 11/00

(54) **DEVICE AND METHOD FOR INSERTING, SECTIONING AND FIXING METAL WIRE ELEMENTS IN PLASTIC LAYERS ENCLOSED BETWEEN TWINNED METAL NETTINGS**
VORRICHTUNG UND VERFAHREN ZUM EINSETZEN, TRENNEN UND FIXIEREN VON DRAHTABSCHNITTEN IN KUNSTSTOFFSCHICHTEN ZWISCHEN GEPAARTEN METALLNETZEN
DISPOSITIF ET PROCÉDÉ POUR INSÉRER, COUPER ET FIXER DES ÉLÉMENTS DE FIL MÉTALLIQUE DANS DES COUCHES DE PLASTIQUE ENFERMÉES ENTRE DES TREILLIS MÉTALLIQUES JUMELÉS

(30) Priority: 14.05.2012 IT PS20120009
(43) Date of publication of application: 18.06.2014
(73) Proprietor: Candiracci, Angelo, 61032 Fano (IT)
(72) Inventor: CANDIRACCI, Angelo, 61032 Fano (IT)
(74) Representative: Gustorf, Gerhard
(86) International application number: PCT/EP2013/059898
(87) International publication number: WO 2013/171191

(56) References cited:
- EP-A1- 0 308 837
- EP-A1- 0 631 830
- EP-A1- 1 733 820
- GB-A- 930 149
- GB-A- 1 122 825

## Description

### State of the art

The present invention starts from EP 0 308 837 A1 and relates to a device and a method for inserting, sectioning and fixing metal wire elements in plastic layers enclosed between twinned metal nettings as set forth in the preambles of claim 1 and claim 6 respectively.

There are known sandwich building panels made of steel wire netting and expanded plastic material, formed by a panel-like core made of expanded plastic material, for example polystyrene, enclosed between two electrowelded steel wire grids or nettings, also mutually joined - by electrowelding - by sections of steel wire to constitute crosspieces perforating said core.

The monolithic product thus made may be positioned modularly onsite and plastered, held by the metal nettings, to constitute prefabricated panels with optimal resistance, antiseismic, heat insulation, sound-proof and fire-proof characteristics.

Furthermore, a twinned pair of panels thus made may be used, with excellent results, as a formwork so to say "disposable", i.e. as a container for the concrete mixture poured between the two panels, which remain incorporated therewith, enclosed to collaborate in the constitution of the panel, and may be plastered on the outer faces, as illustrated above for the single panel.

Such panels are fabricated at industrial level by "sewing" machines, which provide for inserting metal wires through the layer of expanded plastic material, cutting the inserted sections and welding them to the grids on the two sides, so as to constitute the joint crosspieces to constrain the structure, as described and illustrated in EP 0 308 837 A1, EP 0 631 830 A1 and EP 1 733 820 A1 on behalf of the present applicant and to which reference shall be made for better understanding of the technological context.

A common characteristic for all these machines according to the prior art lies in the fact that the execution of the operations of introducing, cutting and welding - at the two ends - of the crosspieces occur in two stations, or advancement steps, of the product to be processed on the conveyor line of the machine, i.e. introduction, cutting and lower welding operations are carried out in the first while the upper welding operation is carried out in the second one.

### Objects of the invention

In such context, the main object of the present invention is that of providing a device and a method capable - in the machine for "sewing" sandwich building panels made of metal nettings and expanded plastic material - of performing the operations of introducing, cutting and welding - at the two ends - of the joint crosspieces of the nettings at a single station for the advancement of the product on the conveyor line of the machine.

Another object of the present invention is to attain the preceding object through a device and a method also capable of implementing the solutions suitable for maximizing the actual penetration of the crosspieces into the plastic material without damaging the surfaces of the letter when entering and exiting.

Another object of the present invention is to attain the previous objects through a device and a method that can also be applied to machines according to the prior art without affecting the relative operating cycle, so as to still be able to advantageously exploit the existent production lines increasing productivity and versatility thereof.

A further object of the present invention is to attain the previous objects through a device and a method which, besides allowing producing any type and kind of sandwich building panel made of metal nettings and expanded plastic material having greater versatility, also capable of producing new panel structures and save production material.

A further object of the present invention is to attain the previous objects through a device and a method that are simple and functional, safe in use and relatively inexpensive considering the results practically obtained therewith.

### Summary of the embodiment

These and other objects are attained by means of a device for inserting, sectioning and fixing wire-like metal elements into plastic materials enclosed between twinned metal nettings according to the present invention, particularly for introducing, defining and welding crosspieces in automatic "sewing" machines for producing prefabricated sandwich panels made of metal nettings and expanded plastic material, which provide for inserting metal wires through the layer of expanded plastic material, cutting the inserted sections and welding them to the nettings on the two sides, having the features of claim 1. Said objects are also attained by a method according to claim 6.

### Description of the attached drawings

Further characteristics and advantages of the device and method for inserting, sectioning and fixing wire-like metal elements into plastic materials enclosed between twinned metal nettings, according to the present invention, will be more apparent from the detailed description that follows of a preferred and non-exclusive embodiment thereof, represented solely by way of non-limiting example in the attached drawings wherein:
Figure 1 shows a front view of a battery of devices for inserting, sectioning and fixing wire-like metal elements into plastic materials enclosed between twinned metal nettings, according to the present invention, as supported transversely adjacent and positioned above the operating line of an automatic "sewing" machine (not illustrated), for producing sandwich prefabricated panels made of metal nettings and expanded plastic material (not illustrated),
Figure 2 shows a front view of one of the devices,

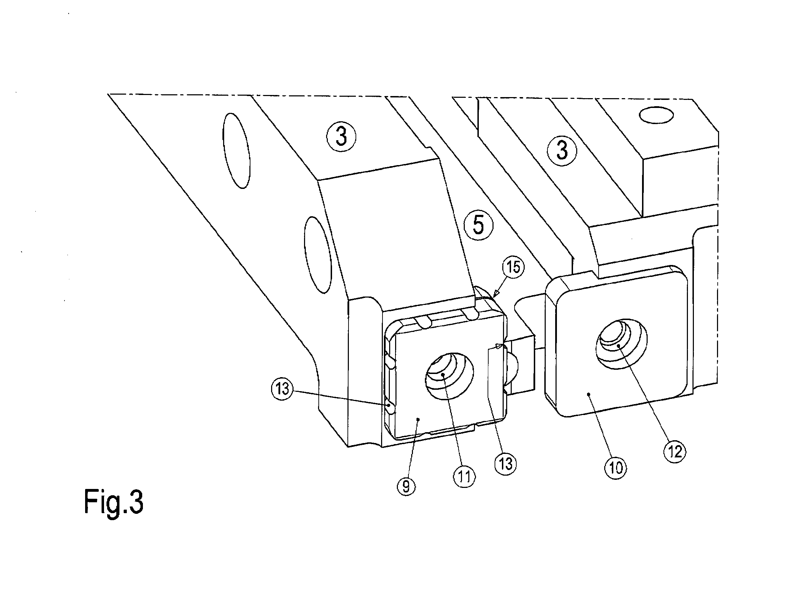

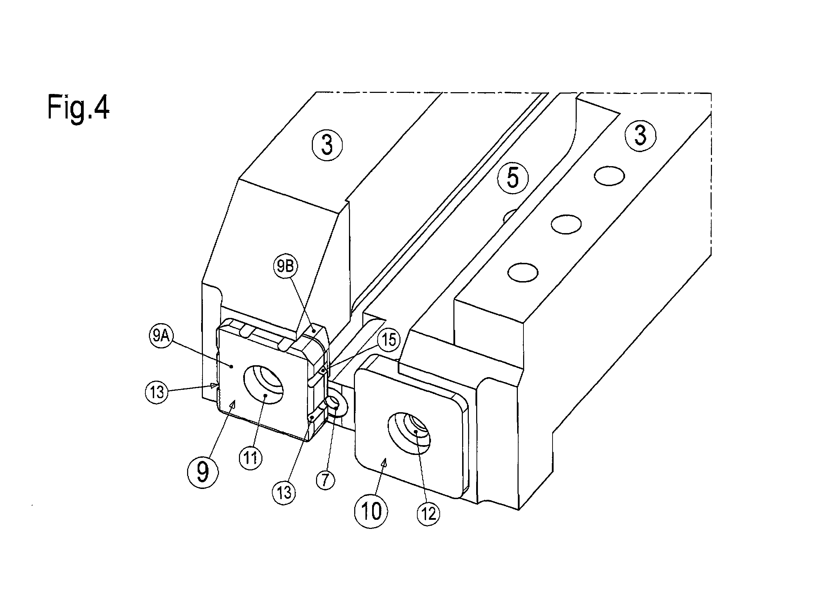

Figures 3 and 4 show two perspective bottom views of one of the devices,

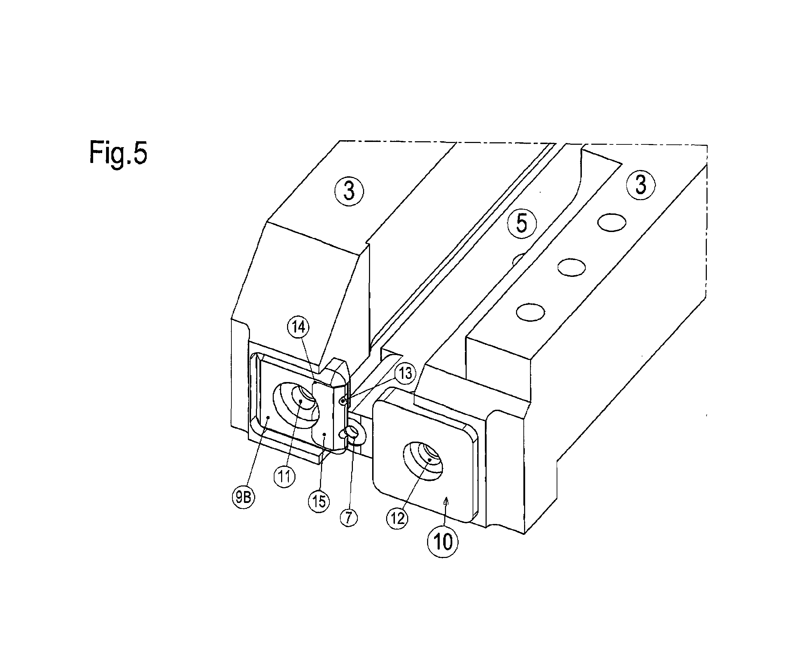

Figure 5 shows a perspective bottom view of one of the devices with one of the constituting elements removed and
Figure 6 shows a perspective bottom view of one of the devices operating on crosspiece sections and weft wires of prefabricated sandwich panels made of metal nettings and expanded plastic material.

### Static description of the preferred embodiment

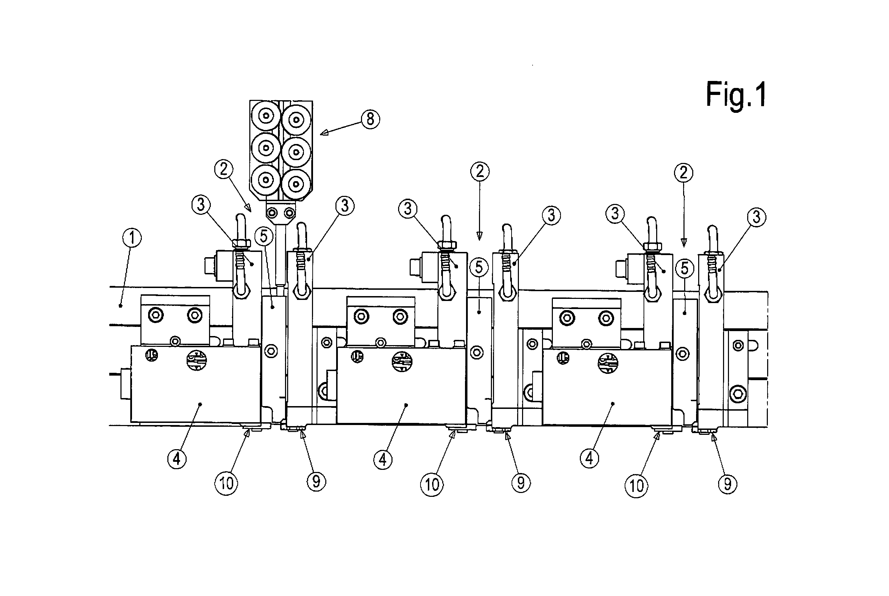

With reference to such figures, and in particular Figure 1, a beam - like crosspiece 1 is transversely arranged above a conveyor line of an automatic panel-forming machine (not illustrated). On the line of said machine a series of panels constituted by a sandwich arrangement of two metal grids enclosing a layer of expanded plastic material (not illustrated), consecutively follow each other to be connected ("sewn") by means of a plurality of metal wire elements 6, which, preferably in parallel pairs, perforate the layer of plastic material and are electrowelded at their apices to the weft wires 16 of the grids. Reference is made to the above mentioned prior art documents.

The crosspiece 1 is vertically displaceable through translator means of any type suitable for the purpose, both to vary the arrangement thereof upon the variation of the thickness of the panels to be sewn which transit therebeneath, and for the functions described below regarding a combined upper preheating-cutting-welding device 2, supported thereby in any plurality, as described below.

As shown in figure 1, the crosspiece 1 supports a battery of devices 2 for inserting, sectioning and fixing the wire elements 6 into the plastic layer enclosed between twinned metal grids, according to the present invention. Each device 2 comprises two pivoting forks 3, connected for their mutual movement to a pneumatic actuator 4.

The pivoting forks 3 are arranged on the sides of two combined casings 5, through which are passing - in parallel - two twinned metal wires 6, projecting - at the lower part - from respective holes 7.

The metal wires 6 reach the casings 5 from above, after passing through respective wire straighteners 8, one of which is illustrated in figure 1 and is to be deemed accompanied with a second one each having a preheating-cutting-welding device 2.

The metal wires 6 reach the wire straighteners 8 from above, coming from respective upper suppliers (not illustrated), which provide them according to the advancement portions contingently required for the preheating-cutting-welding devices 2, according to a programmable computer logic, to which the latter and the entire machine are connected.

To the lower end of the pivoting forks 3 there are mounted, oppositely interfaced, two mutually interacting electrodes 9 and 10. The electrodes 9 and 10 are fixed to said lower ends by means of screws, of which only the threaded bores 11 and 12 are illustrated. The first electrode 9 is made of two parts as described below while the second electrode 10 is monolithic.

The electrode 9 protrudes up to the hole 7 for the exit of metal the wires 6 from the casing 5 and has recesses 13 on its periphery for semi-embracing the exiting wires 6. The recesses 13 are preferably provided on all the sides of the electrode 9 which has a square-shaped base, so as to make it interchangeably polyvalent on all the sides, increasing the value against operational wear thereof.

The first electrode 9 is horizontally divided into two portions 9A and 9B, between which there is obtained an opening 14 for housing a cutting insert 15, preferably made of widia, which is thus embedded between the semi-electrodes 9A and 9B; it also has the analogous recesses 13 along the line for the passage of the metal wire 6.

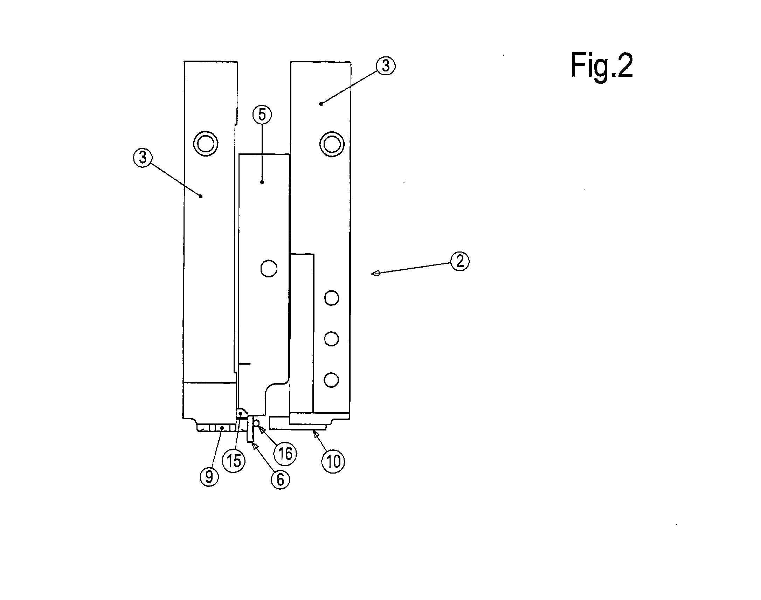

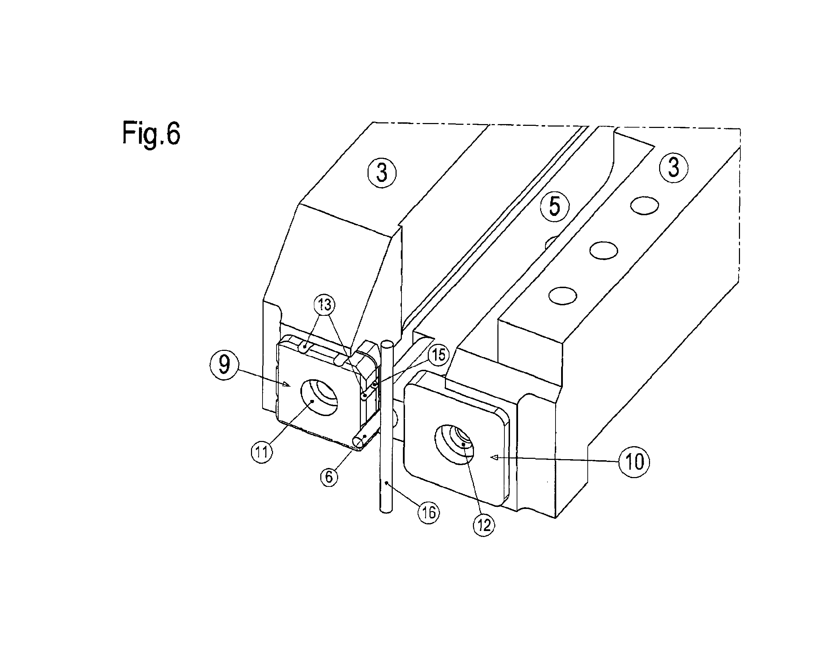

In figures 2 and 6 a section of metal wire is shown, deemed to constitute a portion of a weft wire 16 of a metal grid defining - at the upper part - a sandwich panel made of metal grids and expanded plastic material (not illustrated), made to transit therethrough, for the purposes to be described hereinafter.

### Dynamic description of the preferred embodiment

Thus, having completed the static description of a preferred embodiment of the device for inserting, sectioning and fixing metal wire elements into plastic material enclosed between twinned metal grids, according to the present invention, the following is a dynamic description thereof.

The context of operation is that of an automatic panel-forming machine (not illustrated) on the production line having a series of panels constituted by a sandwich arrangement made up of two metal grids enclosing a layer of expanded plastic material (not illustrated) consecutively following each other, to be "sewn" by means of a plurality of metal wire crosspieces, which, preferably in parallel pairs, perforate the layer of plastic material to be electrowelded - at the apices - to the weft wires of the grids.

In this operating context, a battery of said devices 2, hanging transversely adjacent to each other above the conveyor line of the panels, inserts - into the intermediate plastic layer thereof - through metal wire crosspieces 6 preferably twinned in parallel pairs, and cuts them at the upper part thus defining the section required, while a battery of lower welders, arranged transversely beneath the conveyor line of the panels, aligned with the battery of the upper introduction-cutting devices 2, simultaneously welds - at the base - the through crosspieces to the weft wires of the lower grid.

In a subsequent station of the advancement line of the panels, a battery of upper welders, arranged transversely above the advancement line of the panels, suitably receded with respect to the battery of the upper introduction-cutting devices, welds - at the top part - the through crosspieces to the weft wires of the upper grids, thus completing - in two stages, i.e. two consecutive steps or two consecutive operation stations - the sewing of the panel, hence the operations of inserting, defining and fixing the through crosspieces.

According to an improvement described and illustrated in IT 1.330.254 (also published as IT PS 20010010) on behalf of the same Applicant, there is conceived a device for heating the apex of the crosspieces, arranged at the fulcrum of the nipper cutting means of the introduction-cutting devices, to facilitate the penetration thereof into and through the expanded plastic material.

The operation of the preheating-cutting-welding device 2 according to the present invention integrates a method for inserting, sectioning and fixing metal wire elements into plastic materials enclosed between twinned metal grids, particularly for introducing, defining and welding such crosspieces in the automatic "sewing" machines for producing sandwich prefabricated panels made of metal grids and expanded plastic material, which provide for inserting metal wires through the layer of expanded plastic material, cutting the inserted sections and welding them to the grids on the two sides, so as to constitute the joint crosspieces to constrain the structure, characterised in that it comprises operative completion in a single station for the advancement of the product to be processed on the conveyor line and not in two subsequent stations as referred to in the above mentioned prior art.

Contingently, the operation of the device 2, to be multiplied by the number of devices 2 constituting the battery or the method according to the present invention, provide for the steps of:
- heating the ends of the twinned pair of metal wires 6, supplied step-by-step by synchronised upper supply means (not illustrated), heating actuated by engaging the ends of the wires 6 through the pair of electrodes 9 and 10 alternating in opposite translation under the motion imparted by the pneumatic actuator 4 to the pivoting forks 3;
- introducing the metal wires 6 thus heated at the tip through the plastic material enclosed between the metal grids, in proximity of relative weft wires 16, so that the plastic material is tendentially locally molten during the mechanical perforation, facilitating the perforation and avoiding the detachment of fragments, especially in exit, which, besides representing negative aesthetic effects in the finished product, are unadvisable due to their capacity to find its way between the mechanisms of the devices and lead to malfunctions as regards the correct operation;
- axial translation motion of the pair of electrodes 9 and 10 at the level of intersection of the proximal apex of the crosspieces 6 with the weft wire 16 of the netting, through the translation of the support crosspiece 1, actuated in any known manner suitable for the purpose;
- sectioning the metal wires 6 introduced through the plastic material, to define crosspieces 6, flush-cut by means of the pair of electrodes 9 and 10 oppositely translated under the control of the pneumatic actuator 4 of the pivoting forks 3, wherein said electrodes 9 and 10 initially serve as cutters by means of the cutting insert 15 enclosed in the thickness of an electrode 9. The cutting operation takes place by the shearing action between the cutting insert 15 and the hole or opening 7 of the wire guide casing 5.
- substantially simultaneously welding the proximal apex of the crosspieces 6, for cutting as described before, with the weft wire 16 of the grid, simultaneously engaged through the pair of electrodes 9 and 10 continuing the mutual contact subsequent to the cutting;
- reverse axial translation motion of the pair of electrodes 9 and 10 at the operating level of the pre-penetration heating of the ends of the twinned pair of metal wires 6 for a new operating cycle, and so on;
- simultaneously, a battery of lower welders (not illustrated) arranged transversely beneath the conveyor line of the panels, suitably aligned with the battery of upper combined preheating-cutting-welding devices 2, welds - at the base - the through crosspieces 6 to the weft wires 16 of the lower netting, according to the prior art.

### Alternative embodiment

It is obvious that further alternative embodiments may be alternatively implemented if still falling within the solution claimed below.

### Advantages of the invention

As clear from the detailed description of a preferred but non-exclusive embodiment, the device and method for inserting, sectioning and fixing metal wire elements into plastic materials enclosed between twinned metal nettings, according to the present invention, offer advantages corresponding to the attainment of the preset objects alongside other advantages:

As a matter of fact, the solutions described herein incorporate a simple and functional concept solution for considerably improving the functionality of the automatic panel-forming machines, on which a series of panels constituted by a sandwich of two metal grids or nettings enclosing a layer of expanded plastic material consecutively follow each other, to be "sewn" by means of a plurality of metal wire crosspieces which perforate the layer of plastic material and they are electrowelded - at the apices - to the wefts of the nettings; as described and illustrated in the above mentioned prior art documents.

As a matter of fact, they combine the functions of upper preheating, cutting and welding in a single station, so that the advancement of the panels on the relative conveyor is not bound to the compulsory step between the cutting station and the upper welding station, or a plurality of them, and hence the insertion of the crosspieces may be adjusted in whatever way, even with asymmetric criteria to reinforce the points intended to be more subjected to stresses in the finished product, through simple programming or programmed adjustment of the computerized logic to which the machine is connected, without any restrictions in terms of required interspaces between mechanical elements.

### REFERENCE NUMBERS

1 ) crosspiece for supporting the combined preheating-cutting-welding devices
2 ) combined preheating-cutting-welding devices
3 ) pivoting forks of the combined preheating-cutting-welding devices 2
4 ) pneumatic actuator of the pivoting forks 3
5 ) twinned wire guide casings
6 ) metal wires
7 ) holes for the exit of metal wires from the twinned wire guide casings 5
8 ) wire straightener
9 ) split electrode
9A) upper portion of the split electrode
9B) lower portion of the split electrode
10 ) monolithic electrode
11 ) threaded bore for the split electrode fixing screw
12 ) threaded bore for the monolithic electrode fixing screw
13 ) wire abutment recesses in the split electrode and in the relative cutting insert
14 ) cutter housing opening in the split electrode
15 ) cutting insert
16 ) weft wire section of the upper grid of the panel

## Claims

1. Device for inserting, sectioning and fixing metal wire elements (6) into plastic materials enclosed between twinned metal nettings, particularly for introducing, defining and welding crosspieces in automatic "sewing" machines for producing prefabricated sandwich panels made of metal nettings and expanded plastic material, which provide for inserting metal wires through the layer of expanded plastic material, cutting the inserted sections and welding them to the nettings on the two sides, so as to constitute the joint crosspieces to constrain the structure, comprising:
- at least one pair of electrodes (9, 10) laterally oppositely interfaced to a transit line of at least one metal wire (6) provided with synchronised supply means;
- at least one cutting device working in association with at least one electrode (9) of the pair of electrodes (9, 10);
- means (3, 4) for displacing the pair of electrodes (9, 10) from a mutually diverged position to a mutual interference position;
- means (1) for translating the pair of electrodes (9, 10) from a distanced position to a position intersecting the weft wires (16) of the metal netting, **characterised in that** said at least one cutting means is made of a cutting insert (15) housed in said at least one electrode (9) of the pair of electrodes (9, 10).

2. Device according to claim 1, **characterised in that** one of said electrodes (9) is horizontally divided into two portions (9A, 9B), between which there is obtained an opening (14) for housing said cutting insert (15) which is embedded between said electrode portions (9A, 9B).

3. Device according to claim 1 or 2, **characterised in that** said at least one embedded cutting insert (15) and its relative electrode (9) have recesses (13) for interfacing said at least one metal wire (6).

4. Device according to any of the preceding claims, **characterised in that** it comprises:
- two pivoting forks (3) connected to a pneumatic actuator (4) for mutually moving on the sides of two combined casings (5) through which respectively transit in parallel two twinned metal wires (6) projecting - at the lower casing part - from respective holes (7) and - at the upper part - they arrive from supply means which provide them according to advancement portions programmed by a computerized logic to which the machine mechanisms are connected;
- two electrodes (9, 10) associated to the lower end of said pivoting forks (3) oppositely interfaced mutually interacting, one of which (9) protrudes resting near the holes (7) for the exit of metal wires (6) from the casings (5) at which said electrode (9) has recesses (13), said electrode (9) being horizontally divided into two portions (9A, 9B) between which there is obtained an opening (14) for housing a cutting insert (15) embedded between said semi-electrodes (9A, 9B) and also provided with recesses (13) at the line for the passage of the metal wires (6);
- a beam (1) supporting a plurality of pairs of said pivoting forks (3) connected to vertically displaceable pneumatic actuators (4), arranged transversely hanging - at the upper part - above the conveyor line of the automatic panel-forming machine on whose line a series of panels constituted by a sandwich arrangement of two metal grids enclosing a layer of expanded plastic material consecutively follow each other to be "sewn" by means of a plurality of crosspieces of metal wire (6).

5. Device according to claim 4, **characterised in that** said recesses (13) are provided on all four sides of said electrode (9) having a square-shaped base so as to make it interchangeably polyvalent on all the sides.

6. Method for inserting, sectioning and fixing wire-like metal elements into plastic materials enclosed between twinned metal nettings, particularly for introducing, defining and welding crosspieces in automatic "sewing" machines for producing sandwich prefabricated panels made of metal nettings and expanded plastic material, which provides for inserting metal wires through the layer of expanded plastic material, cutting the inserted sections and welding them to the nettings on the two sides, so as to constitute the joint crosspieces to constrain the structure, **characterised in that** it comprises, in a single station for the advancement of the product to be processed, the steps of:
- heating the end of at least one metal wire (6) supplied step by step by synchronised supply means engaged through a pair of electrodes (9, 10) alternating in opposite translation;
- introducing the metal wire (6) through the plastic material enclosed between the metal nettings in proximity of relative weft wires (16);
- axial translation of the pair of electrodes (9, 10) at the level of intersection of the proximal apex of the crosspiece (6) with the weft wire (16) of the netting;
- sectioning the metal wire (6) introduced through the plastic material to define a crosspiece (6) flush-cut by means of the pair of oppositely translated electrodes (9, 10) also serving as cutters by means of at least one cutting insert (15) housed therein;
- welding the proximal apex of the crosspiece (6) with the weft wire (16) of the netting engaged through the pair of oppositely translated electrodes (9, 10).

7. Method according to claim 6, **characterised in that** it comprises the steps of:
- heating the ends of a twinned pair of metal wires (6) supplied step-by-step by synchronised supply means actuated by engaging the ends of the wires (6) through a pair of electrodes (9, 10) alternating in opposite translation under the action of a pneumatic actuator (4) of pivoting forks (3) to which said electrodes (9, 10) are associated apically;
- introducing the metal wires (6) thus heated at the tip through the plastic material enclosed between the metal nettings, in proximity of relative weft wires (16), so that the plastic material is locally molten during the mechanical perforation, facilitating the perforation and avoiding the detachment of fragments;
- axial translation motion of the pair of electrodes (9, 10) at the level of intersection of the proximal apex of the crosspieces (6) with the weft wire (16) of the netting actuated through the translation of the displaceable beam (1) for supporting a plurality of devices (2) for implementing the method, arranged transversely hanging - above the upper part - on the conveyor line of the automatic panel-forming machine on whose line a series of panels constituted by a sandwich arrangement of two metal nettings enclosing a layer of expanded plastic material consecutively follow each other to be "sewn" by means of a plurality of crosspieces of metal wire (6);
- sectioning the metal wires (6) introduced through the plastic material, to define crosspieces, flush-cut by means of the pair of electrodes (9, 10) oppositely translated under the control of the pneumatic actuator (4) of the pivoting forks (3) wherein said electrodes (9, 10) initially serve as cutters by means of a cutting insert (15) enclosed in the thickness of an electrode (9), wherein the cutting operation is achieved by a sheaving action between the cutting insert (15) and the edge of the opening or hole (7) of the wire guide casing (5);
- substantially simultaneously welding the proximal apex of the crosspieces (6), for cutting as described before, with the weft wire (16) of the netting, simultaneously engaged through the pair of electrodes (9, 10) continuing the mutual contact subsequent to the cutting;
- reverse axial translation motion of the pair of electrodes (9, 10) at the operating level of the pre-penetration heating of the ends of the twinned pair of metal wires (6) actuated through the reverse translation of the displaceable beam (1) for a new operating cycle;
- simultaneous base welding of the through crosspieces of the metal wire (6) to the weft wires (16) of the lower netting actuated by a battery of lower welders arranged transversely beneath the conveyor line of the panels suitably arranged at the battery of upper combined preheating-cutting-welding devices (2).

## Patentansprüche

1. Vorrichtung zum Einsetzen, Trennen und Fixieren von Drahtabschnitten (6) in Kunststoffschichten zwischen gepaarten Metallnetzen, insbesondere zum Einführen, Definieren und Schweißen von Querstücken in automatischen "Nähmaschinen" zum Erzeugen von vorgefertigten Sandwichplatten aus Metallnetzen und Schaumkunststoffmaterial, die das Einsetzen von Drähten durch die Schicht aus Schaumkunststoffmaterial, Schneiden der eingesetzten Teilabschnitte und Verschweißen derselben mit den Netzen auf den zwei Seiten vorsehen, um die verbundenen Querstücke zum Begrenzen der Struktur zu bilden, umfassend:
- zumindest ein Paar Elektroden (9, 10), die seitlich gegenüberliegend an eine Transitlinie von zumindest einem Draht (6) gekoppelt sind und mit synchronisierten Zufuhrmitteln versehen sind;
- zumindest eine Schneidvorrichtung, die in Zugehörigkeit mit zumindest einer Elektrode (9) des Paars von Elektroden (9, 10) arbeitet;
- Mittel (3, 4) zum Verschieben der Elektroden (9, 10) aus einer wechselseitig divergierenden Position zu einer wechselseitigen Interferenzposition;
- Mittel (1) zum Überführen des Paars von Elektroden (9, 10) aus einer beabstandeten Position zu einer Position, die die Gewebedrähte (16) des Metallnetzes schneidet, **dadurch gekennzeichnet, dass** zumindest ein Schneidmittel aus einem Schneideinsatz (15) hergestellt ist, das in der zumindest einen Elektrode (9) des Paars von Elektroden (9, 10) eingefasst ist.

2. Vorrichtung nach Anspruch 1, **dadurch gekennzeichnet, dass** eine der Elektroden (9) horizontal in zwei Abschnitte (9A, 9B) aufgeteilt ist, zwischen denen eine Öffnung (14) zum Einfassen des Schneideinsatzes (15) erzielt ist, der zwischen den zwei Elektrodenabschnitten (9A, 9B) eingelassen ist.

3. Vorrichtung nach einem der Ansprüche 1 oder 2, **dadurch gekennzeichnet, dass** der zumindest eine eingelassene Einsatz (15) und seine jeweilige Elektrode (9) Aussparungen (13) zum Ankoppeln an den zumindest einen Draht (6) aufweisen.

4. Vorrichtung nach einem der vorhergehenden Ansprüche, **dadurch gekennzeichnet, dass** sie Folgendes umfasst:
- zwei Schwenkgabeln (3), die zum wechselseitigen Bewegen mit einem pneumatischen Stellglied (4) auf den Seiten von zwei kombinierten Gehäusen (5) verbunden sind, durch die zwei gepaarte Drähte (6) jeweils parallel verlaufen, die - am unteren Gehäuseteil - von jeweiligen Löchern (7) vorstehen und - am oberen Teil - von Zufuhrmitteln ankommen, die sie gemäß Vorschubabschnitten versorgen, welche durch eine rechnergestützte Logik programmiert sind, mit der die Maschinenmechanismen verbunden sind;
- zwei Elektroden (9, 10), die dem unteren Ende der Schwenkgabeln (3) zugeordnet sind und gegenüberliegend gekoppelt wechselseitig interagieren, wobei eine von ihnen (9) nahe den Löchern (7) für den Austritt der Drähte (6) aus den Gehäusen (5) ruhend vorsteht, an denen die Elektrode (9) Aussparungen (13) aufweist, wobei die Elektrode (9) horizontal in zwei Abschnitte (9A, 9B) aufgeteilt ist, zwischen denen eine Öffnung (14) zum Einfassen eines Schneideinsatzes (15) erzielt ist, der zwischen den zwei Halbelektroden (9A, 9B) eingelassen ist, und außerdem mit Aussparungen(13) an der Linie für den Durchgang der Drähte (6) versehen ist;
- einen Träger (1), der mehrere Paare der Schwenkgabeln (3) stützt, die mit vertikal verschiebbaren, pneumatischen Stellgliedern (4) verbunden sind, und quer hängend - am oberen Teil - über der Förderlinie der automatischen Plattenausbildungsmaschine angeordnet ist, wobei auf deren Linie eine Reihe von Platten, die durch eine Sandwich-Anordnung von zwei Metallgittern, welche eine Schicht aus Schaumkunststoffmaterial einfassen, gebildet sind, einander nacheinander zum "Nähen" mithilfe von mehreren Querstücken aus Draht (6) folgen.

5. Vorrichtung nach Anspruch 4, **dadurch gekennzeichnet, dass** die Aussparungen (13) auf allen vier Seiten der Elektrode (9) mit einer quadratischen Basis vorgesehen sind, um sie austauschbar polyvalent auf allen den Seiten herzustellen.

6. Verfahren zum Einsetzen, Trennen und Fixieren von drahtartigen Abschnitten (6) in Kunststoffmaterialien zwischen gepaarten Metallnetzen, insbesondere zum Einführen, Definieren und Schweißen von Querstücken in automatischen "Nähmaschinen" zum Erzeugen von vorgefertigten Sandwichplatten aus Metallnetzen und Schaumkunststoffmaterial, die das Einsetzen von Drähten durch die Schicht aus Schaumkunststoffmaterial, Schneiden der eingesetzten Teilabschnitte und Verschweißen derselben mit den Netzen auf den zwei Seiten vorsehen, um die verbundenen Querstücke zum Begrenzen der Struktur zu bilden, **dadurch gekennzeichnet, dass** es in einer einzelnen Station zum Vorschub des Produkts, das verarbeitet werden soll, die folgenden Schritte umfasst:
- Erhitzen des Endes von zumindest einem Draht (6), der schrittweise durch synchronisierte Zufuhrmittel zugeführt wird und über ein Paar Elektroden (9, 10), die in entgegengesetzter Versetzung abwechseln, in Eingriff genommen werden;
- Einführen des Drahts (6) durch das Kunststoffmaterial, das zwischen den Metallnetzen eingefasst ist, in der Nähe von jeweiligen Gewebedrähten (16);
- axiales Versetzen des Paars von Elektroden (9, 10) an der Schnitthöhe des proximalen Scheitels des Querstücks (6) mit dem Gewebedraht (16) des Netzes;
- Trennen des Drahts (6), der durch das Kunststoffmaterial eingeführt ist, zum Definieren eines Querstücks (6), das mithilfe des Paars von gegenüberliegend versetzten Elektroden (9, 10) bündig abgeschnitten wird, welche außerdem als Schneidvorrichtungen mittels zumindest eines Schneideinsatzes (15) dienen, der darin eingefasst ist;
- Verschweißen des proximalen Scheitels des Querstücks (6) mit dem Gewebedraht (16) des Netzes, der durch das Paar gegenüberliegend versetzen Elektroden (9, 10) in Eingriff genommen ist.

7. Verfahren nach Anspruch 6, **dadurch gekennzeichnet, dass** es folgende Schritte umfasst:
- Erhitzen der Enden eines gepaarten Paars von Drähten (6), die schrittweise durch synchronisierte Zufuhrmittel zugeführt werden, welche durch Ineingriffnahme der Enden der Drähte (6) durch ein Paar Elektroden (9, 10) betätigt werden, die in entgegengesetzter Versetzung unter der Einwirkung eines pneumatischen Stellglieds (4) von Schwenkgabeln (3) abwechseln, denen die Elektroden (9, 10) apikal zugeordnet sind;
- Einführen der Drähte (6), die derart an der Spitze erhitzt wurden, durch das Kunststoffmaterial, das zwischen den Metallnetzen eingefasst ist, in der Nähe von jeweiligen Gewebedrähten (16), sodass das Kunststoffmaterial während der mechanischen Perforation örtlich geschmolzen wird, wodurch die Perforation erleichtert und die Ablösung von Fragmenten vermieden wird;
- axiales Versetzungsbewegen des Paars von Elektroden (9, 10) an der Schnitthöhe des proximalen Scheitels der Querstücke (6) mit dem Gewebedraht (16) des Netzes, betätigt durch die Versetzung des verschiebbaren Trägers (1) zum Stützen von mehreren Vorrichtungen (2) zum Umsetzen des Verfahrens, der quer hängend - über dem oberen Teil - an der Förderlinie der automatischen Plattenausbildungsmaschine angeordnet ist, wobei auf deren Linie eine Reihe von Platten, die durch eine Sandwich-Anordnung von zwei Metallgittern, welche eine Schicht aus Schaumkunststoffmaterial einfassen, gebildet sind, einander nacheinander zum "Nähen" mithilfe von mehreren Querstücken aus Draht (6) folgen;
- Trennen der Drähte (6), die durch das Kunststoffmaterial eingeführt sind, zum Definieren von Querstücken, die mithilfe des Paars von Elektroden (9, 10), welche unter der Steuerung des pneumatischen Stellglieds (4) der Schwenkgabeln (3) gegenüberliegend versetzt werden, bündig abgeschnitten werden, wobei die Elektroden (9, 10) anfänglich als Schneidvorrichtungen mittels eines Schneideinsatzes (15) dienen, der in der Dicke einer Elektrode (9) eingefasst ist, wobei der Schneidbetrieb durch einen Schervorgang zwischen dem Schneideinsatz (15) und der Kante der Öffnung oder des Lochs (7) des Drahtführungsgehäuses (5) erzielt wird;
- im Wesentlichen gleichzeitiges Verschweißen des proximalen Scheitels der Querstücke (6), zum Schneiden wie oben beschrieben, mit dem Gewebedraht (16) des Netzes, der gleichzeitig durch das Paar Elektroden (9, 10) in Eingriff genommen ist, die den wechselseitigen Kontakt im Anschluss an das Schneiden fortsetzen;
- umgekehrtes axiales Versetzungsbewegen des Paars Elektroden (9, 10) auf das Betriebsniveau des Erhitzens, vor dem Eindringen, der Enden des gepaarten Paars von Drähten (6), betätigt durch die Umkehrversetzung des verschiebbaren Trägers (1) für einen neuen Betriebszyklus;
- gleichzeitiges Basisverschweißen der Durchgangsquerstücke des Drahts (6) mit den Gewebedrähten (16) des unteren Netzes, betätigt durch eine Batterie von unteren Schweißgeräten, die quer unterhalb der Förderlinie der Platten angeordnet sind, welche geeignet an der Batterie von oberen kombinierten Vorheiz-/Schneid-/Schweiß-Geräten (2) angeordnet sind.

## Revendications

1. Dispositif pour insérer, couper et fixer des éléments de fil métallique (6) dans des couches de plastique enfermées entre des treillis métalliques jumelés, en particulier pour introduire, définir et souder des croisillons dans des machines « à coudre » automatiques pour produire des panneaux sandwich faits de treillis métalliques et de matière plastique expansée, qui permettent d'insérer des fils métalliques à travers la couche de matière plastique expansée, de couper les sections insérées et de les souder aux treillis sur les deux côtés de manière à constituer des croisillons de jointoiement pour contraindre la structure, comprenant :
- au moins une paire d'électrodes (9, 10) interfacées latéralement de façon opposée à une ligne de transit d'au moins un fil métallique (6) doté d'un moyen d'alimentation synchronisé ;
- au moins un dispositif de découpe fonctionnant en association avec au moins une électrode (9) de la paire d'électrodes (9, 10) ;
- des moyens (3, 4) pour déplacer la paire d'électrodes (9, 10) depuis une position mutuellement déviée à une position d'interférence mutuelle ;
- un moyen (1) pour translater la paire d'électrodes (9, 10) d'une position distancée à une position entrecoupant les fils de trame (16) du treillis métallique **caractérisé en ce que** ledit au moins un moyen est fait d'une plaquette de coupe (15) logée dans ladite électrode (9) de la paire d'électrodes (9, 10).

2. Dispositif selon la revendication 1, **caractérisé en ce que** lesdites électrodes (9) sont horizontalement divisées en deux parties (9A, 9B) entre lesquelles on obtient une ouverture (14) pour loger ladite plaquette de coupe (15) qui est encastrée entre lesdites parties d'électrode (9A, 9B).

3. Dispositif selon la revendication 1 à 2, **caractérisé en ce qu'**au moins ladite plaquette de coupe encastrée (15) et son électrode correspondante (9) ont des évidements (13) pour interfacer au moins un fil métallique (6).

4. Dispositif selon l'une quelconque des revendications précédentes, **caractérisé en ce qu'**il comprend :
- deux fourches pivotantes (3) raccordées à un actionneur pneumatique (4) pour se déplacer mutuellement sur les côtés de deux boîtiers combinés (5) à travers lesquels transitent respectivement en parallèle deux fils métalliques (6) jumelés en projection, à la partie inférieur du boîtier, depuis les trous respectifs (7) et, à la partie supérieur, arrivent du moyen d'alimentation qui les distribue en fonction des parties d'avance programmées par un système logique informatisé auquel les mécanismes de la machine sont raccordés ;
- deux électrodes (9, 10) associées à l'extrémité inférieure desdites fourches pivotantes (3) interfacées de façon opposée interagissant mutuellement, dont une (9) fait saillie en reposant près des trous (7) pour la sortie des fils métalliques (6) depuis les boîtiers (5) sur lesquels ladite électrode (9) possède des évidements (13), ladite électrode (9) étant horizontalement divisée en deux parties (9A, 9B) entre lesquelles on obtient une ouverture (14) pour loger une plaquette de coupe (15) encastrée entre lesdites semi-électrodes (9A, 9B) et également dotée d'évidements (13) à la ligne de passage des fils métalliques (6) ;
- une poutre (1) supportant une pluralité de paires de dites fourches pivotantes (3) raccordées à des actionneurs pneumatiques (4) mobiles verticalement, agencée transversalement suspendue, à la partie supérieure, au-dessus de la ligne de convoyeur de la machine de formation de panneaux automatique, ligne sur laquelle une série de panneaux constituée par un agencement en sandwich de deux grilles métalliques enfermant une couche de matière plastique expansée, se suivent consécutivement les uns les autres pour être « cousus » au moyen d'une pluralité de croisillons de fil métallique (6).

5. Dispositif selon la revendication 4, **caractérisé en ce que** lesdits évidements (13) sont aménagés sur tous les quatre côtés de ladite électrode (9) ayant une base de forme carrée de manière à la rendre polyvalente de façon interchangeable sur tous les côtés.

6. Procédé pour insérer, sectionner et fixer des éléments métalliques filiformes dans des matières plastiques incorporées entre les treillis métalliques jumelés, en particulier pour introduire, définir et souder des croisillons dans des machines « à coudre » automatiques pour produire des panneaux sandwich préfabriquées faits de treillis métallique et de matière plastique expansée, qui permet d'insérer des fils métalliques à travers la couche de matière plastique expansée, de couper les sections insérées et de les souder aux treillis sur les deux côtés de manière à constituer les croisillons de jointoiement pour contraindre la structure, **caractérisé en ce qu'** il comprend, dans un poste unique pour l'avance du produit à transformer, les étapes consistant à :
- chauffer l'extrémité d'au moins un fil métallique (6) acheminé pas à pas par un moyen d'alimentation synchronisé engagé à travers à une paire d'électrodes (9, 10) alternant en translation opposée ;
- introduire le fil métallique (6) à travers la matière plastique enfermée entre les treillis métalliques à proximité des fils de trame correspondants (16) ;
- la translation axiale de la paire d'électrodes (9, 10) au niveau de l'intersection du sommet proximal du croisillon (6) avec le fil de trame (16) du treillis ;
- sectionner le fil métallique (6) introduit à travers la matière plastique pour définir un croisillon (6) coupé à ras au moyen de la paire d'électrodes translatées de manière opposée (9, 10) servant également de découpeuses au moyen d'au moins une plaquette de coupe (15) logée dans celles-ci ;
- souder le sommet proximal du croisillon (6) au fil de trame (16) du treillis engagé à travers la paire d'électrodes translatées de manière opposée (9, 10).

7. Procédé selon la revendication 6, **caractérisé en ce qu'**il comprend les étapes consistant à :
- chauffer les extrémités d'une paire jumelée de fils métalliques (6) acheminée pas à pas par un moyen d'alimentation synchronisé actionné par engagement des extrémités des fils (6) à travers une paire d'électrodes (9, 10) alternant en translation opposée sous l'action d'un actionneur pneumatique (4) des fourches pivotantes (3) auxquelles lesdites électrodes (9, 10) sont associées de manière apicale ;
- introduire les fils métalliques (6) ainsi chauffés au bout à travers la matière plastique enfermée entre les treillis métalliques, à proximité des fils de trame correspondants (16) de manière que la matière plastique soit localement fondue pendant la perforation mécanique, facilitant la perforation et évitant le détachement de fragments ;
- le mouvement de translation axiale de la paire d'électrodes (9, 10) au niveau de l'intersection du sommet proximal des croisillons (6) avec le fil de trame (16) du treillis actionné par la translation de la poutre mobile (1) pour supporter une pluralité de dispositifs (2) pour mettre en oeuvre le procédé, agencée transversalement suspendue, au-dessus de la partie supérieure, sur la ligne de convoyeur de la machine à former les panneaux automatique, ligne sur laquelle une série de panneaux constitués par un agencement sandwich de deux treillis métalliques enfermant une couche de matière plastique expansée, se suivent consécutivement les uns les autres pour être « cousus » au moyen d'une pluralité de croisillons de fil métallique (6) ;
- sectionner les fils métalliques (6) introduits à travers la matière plastique pour définir un croisillon coupé à ras au moyen de la paire d'électrodes (9, 10) translatées de manière opposée sous le contrôle de l'actionneur pneumatique (4) des fourches pivotantes (3) dans lequel lesdites électrodes (9, 10) servent initialement de découpeuses au moyen d'une plaquette de coupe (15) logée dans l'épaisseur d'une électrode (9), dans lequel l'opération de découpe est réalisée par une action de poulie entre la plaquette de coupe (15) et le bord de l'ouverture du trou (7) du boîtier de guidage du fil (5) ;
- souder simultanément pour l'essentiel le sommet proximal des croisillons (6) pour couper selon la description faite préalablement, avec le fil de trame (16) du treillis, simultanément engagé à travers la paire d'électrodes (9, 10) poursuivant le contact mutuel consécutif à la coupe ;
- mouvement de translation axiale inversée de la paire d'électrodes (9, 10) au niveau de fonctionnement du chauffage de pénétration préalable des extrémités de la paire jumelée de fils métalliques (6) actionnée par la translation inversée de la poutre mobile (1) pour un nouveau cycle de fonctionnement ;
- souder à la base simultanément les croisillons de passage du fil métallique (6) aux fils de trame (16) du treillis inférieur par une batterie de soudeuses inférieures agencées transversalement en dessous de la ligne de convoyeur des panneaux agencés de façon appropriée à la batterie de dispositifs combinés supérieurs préchauffage-coupe-soudure (2).
